## Europäisches Patentamt
## European Patent Office
## Office européen des brevets

(19)

(11) Veröffentlichungsnummer: **0 069 344**
**A1**

(12) ## EUROPÄISCHE PATENTANMELDUNG

(21) Anmeldenummer: **82105858.3**

(22) Anmeldetag: **01.07.82**

(51) Int. Cl.³: **H 04 N 1/22**

(30) Priorität: **03.07.81 DE 3126272**

(43) Veröffentlichungstag der Anmeldung:
**12.01.83 Patentblatt 83/2**

(84) Benannte Vertragsstaaten:
**AT BE CH DE FR GB IT LI LU NL SE**

(71) Anmelder: **DR.-ING. RUDOLF HELL GmbH**
**Grenzstrasse 1-5**
**D-2300 Kiel 14(DE)**

(72) Erfinder: **Zelenka, Thomas**
**Turnstrasse 4**
**D-2300 Kiel 14(DE)**

(54) **Verfahren und Einrichtung zur Unterdrückung von Moiréerscheinungen bei der Wiederaufzeichnung bereits gerasterter Bilder.**

(57) Die Anmeldung betrifft ein Verfahren und eine Einrichtung zur Unterdrückung von Moiréerscheinungen bei der Wiederaufzeichnung bereits gerasterter Bilder mittels eines die Vorlage (13) abtastenden elektrooptischen Abtastorgans, eines Aufzeichnungsorgans und eines Aufzeichnungsträgers, wobei zwischen Abtastorgan und Vorlage (13) eine zeilenmäßige Relativbewegung (24) und zwischen Aufzeichnungsorgan und Aufzeichnungsträger eine der Relativbewegung (24) zwischen Abtastorgan und Vorlage (13) entsprechende zeilenmäßige Relativbewegung durchgeführt wird, so daß der zeilenmäßigen Relativbewegung auf der Abtastseite und der zeilenmäßigen Relativbewegung auf der Aufzeichnungsseite je eine quer zur Zeilenrichtung verlaufende auf der Abtastseite und auf der Aufzeichnungsseite sich entsprechende von Zeile zu Zeile gleiche unregelmäßige Querbewegung (24) überlagert wird.

Fig. 1

EP 0 069 344 A1

Verfahren und Einrichtung zur Unterdrückung von
Moiréerscheinungen bei der Wiederaufzeichnung
bereits gerasterter Bilder

Die vorliegende Erfindung betrifft ein Verfahren und eine Einrichtung zur Unterdrückung von Moiréerscheinungen bei der Wiederaufzeichnung bereits gerasterter Bilder gemäß dem Oberbegriff des Patentanspruchs.

In der Reproduktionstechnik entsteht öfter das Problem, daß bereits gerasterte Bildvorlagen nochmals wieder aufgezeichnet werden sollen. Hierbei entsteht durch die Interferenz der räumlichen Rasterfrequenzen des bereits gerasterten Bildes und des Aufzeichnungsrasters mit der räumlichen Zeilenfrequenz ein Moiré. Die Moiréfrequenz und Amplitude hängen von mehreren Parametern ab, wovon die wichtigsten Rastergröße, Rasterwinkel, Abtastliniendichte, Rasterform und Abtastschwelle sind. Da das Moiré bei der Wiederaufzeichnung sehr störend ist und die Bildqualität entscheidend verschlechtert, sind bereits mehrere Vorschläge gemacht worden, das Moiré bei der Wiederaufzeichnung zu unterdrücken. Es ist bereits ein Verfahren bekannt, bei dem die Abtastschwelle, mit der die Bildabta-

- 2 -

stung vorgenommen wird, verrauscht wird. Bei diesem Verfahren wird ein Rauschsignal zum Schwellenreferenzsignal addiert, was allerdings aber wiederum zur Unruhe im Bild und zu einer Verschlechterung der Bildqualität führt.

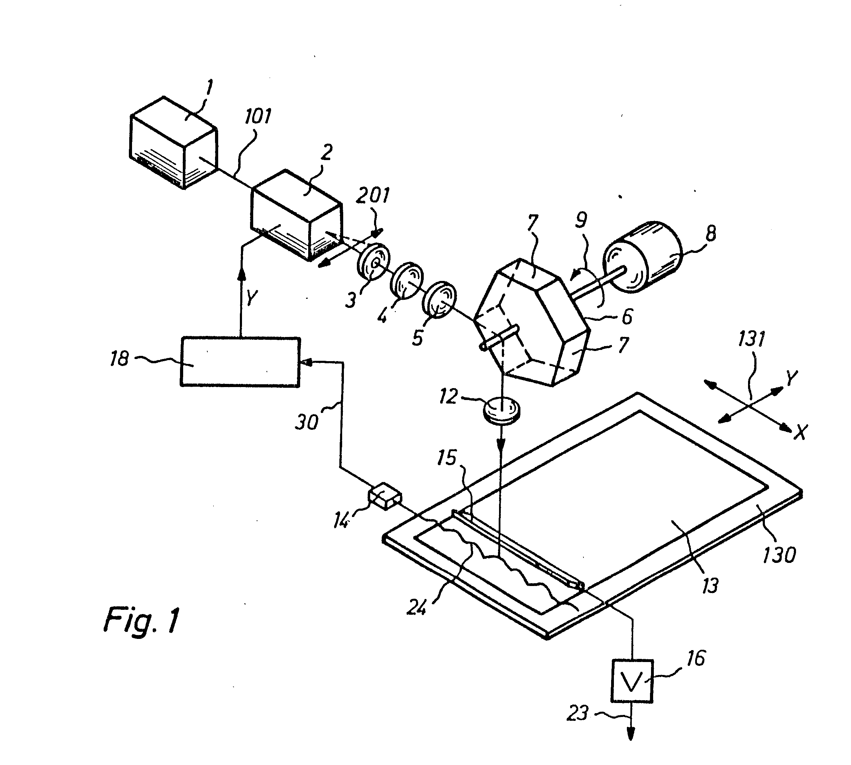

Der vorliegenden Erfindung liegt die Aufgabe zugrunde, ein neues Verfahren anzugeben, mit dem eine Vermeidung von Moiré, d. h. Unterdrückung von Moiréerscheinungen bei zeilenweiser Abtastung und Übertragung bzw. Wiederaufzeichnungen der Bilder, stattfindet. Die Erfindung erreicht dies durch die im kennzeichnenden Teil des Patentanspruchs angegebenen Merkmale. Die Erfindung wird im folgenden anhand der Figuren 1 bis 4 näher erläutert.

Es zeigen:

Figur 1 ein Beispiel für eine elektrooptische Abtasteinheit,

Figur 2 ein Beispiel für eine Aufzeichnungseinheit zur Wiederaufzeichnung des Bildes,

Figur 3 eine schematische Darstellung der Abtast- und Wiederaufzeichnungsbewegung und

Figur 4 ein Schaltungsbeispiel für einen Pseudozufallsgenerator.

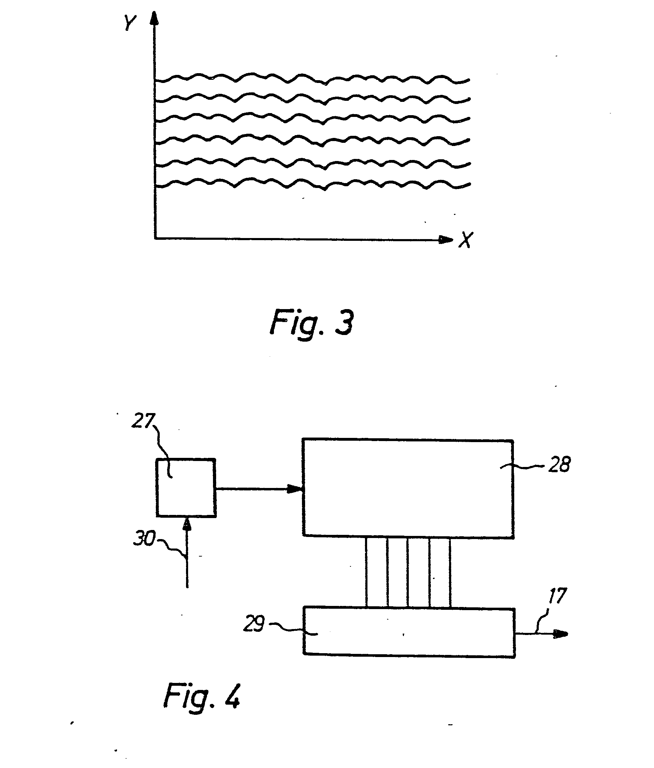

Figur 1 zeigt eine elektrooptische Abtasteinrichtung, wie sie z. B. bei einem Bildübertragungssystem zur Anwendung kommt. Eine Lichtquelle 1, die vorzugsweise als Laser ausgebildet ist emittiert einen Lichtstrahl 101, der über einen akustooptischen Modulator 2, der als Ablenker arbeitet, in Pfeilrichtung 201 ausgelenkt wird. Als Modulator kann z. B. ein Modulator der Fa. Isomet, Type 1205-1-2 verwendet werden. Der Strahl 101 durchläuft ein Linsensystem, bestehend aus den Linsen 3, 4 und 5 und gelangt auf einen rotierenden Polygonspiegel 6, der mehrere Spiegelflächen 7 zur Ablenkung des Strahls aufweist. Der Polygonspiegel 6 wird mittels eines Motors 8 über eine Welle in Pfeilrichtung 9 angetrieben, wobei der Lichtstrahl 101 über eine weitere Optik 12, die zum Fokussieren des Laserstrahls dient, auf eine Vorlage 13 gerichtet wird. Im vorliegenden Beispiel ist ein Fotodetektor 15, der z. B. aus einer Diodenzeilenreihe besteht, vorgesehen, durch den das Bildabtastsignal über einen Verstärker 16 gewonnen wird. Zwischen Lichtstrahl 101 und Vorlage 13 bzw. Vorlagentisch 131 und Fotodetektor 15 findet eine Relativbewegung statt, wie sie durch die Pfeile 131 schematisch dargestellt ist. Hierbei findet eine zeilenmäßige Abtastung der Vorlage 13 statt, wobei der Zeilenbewegung eine unregelmäßige Querbewegung überlagert ist, die durch die Linie 24 angedeutet ist. Die Querbewegung wird mittels des Ablenkers 2, der an einem Pseudozufallsgenerator 18 angeschlossen ist, durchgeführt. Der Zufallsgenerator wird später in Figur 4 näher erläutert. Der Generator 18 wird bei jeder Zeile neu gestartet, wozu ein Zeilenanfangsdetektor 14 vorgesehen ist, der das Zeilenanfangssignal über eine Leitung 30 an den Pseudozufallsgenerator 18 liefert. Der Zeilenanfangsdetektor 14

- 4 -

besteht z. B. aus einer Fotodiode mit nachgeschaltetem Verstärker, wie er in der DE-OS 29 51 435 beschrieben ist. Der Pseudozufallsgenerator wird also bei jeder Zeile neu gestartet und erzeugt jedes Mal das gleiche Zufallssignal, das den Ablenker 2 dazu veranlaßt, in Richtung 201 die Querablenkung gemäß Linie 24 zu erzeugen.

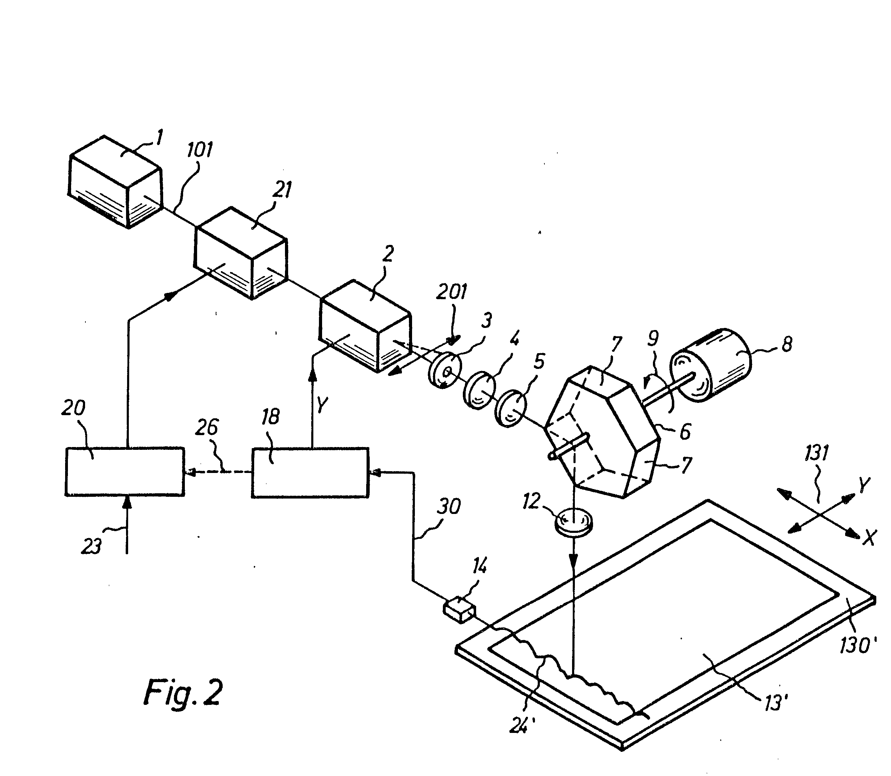

Figur 2 zeigt eine Aufzeichnungseinheit, die gleich aufgebaut ist wie die Abtasteinheit, weshalb für die entsprechenden Baugruppen dieselben Bezugszahlen verwendet worden sind. Ein Laser 1 erzeugt einen Lichtstrahl 101, der über einen zusätzlichen Intensitätsmodulator 21, mit dem die Bildmodulation vorgenommen wird, über den Ablenker 2 auf ein Linsensystem, bestehend aus den Linsen 3, 4 und 5, gegeben wird, wonach der Strahl auf den Polygonspiegel 7 fällt und über die Fokussierungsoptik 12 auf einen Aufzeichnungsträger 13' gegeben wird, der auf einer flachbettförmigen Aufnahme 130' angeordnet ist. Als Modulator 21 kann z. B. ein Modulator der Fa. ISOMET, Type 1205 verwendet werden. Zwischen Lichtstrahl 101 und Aufzeichnungsträger 13' wird ebenfalls die gleiche Relativbewegung, wie sie auf der Aufzeichnungsseite stattfindet, vorgenommen, die durch die Pfeile 131 angedeutet ist. Hierbei entsteht durch die Querablenkung mittels des Modulators 2 in Richtung der Pfeile 201 auf dem Aufzeichnungsträger wiederum eine Zeilenstruktur 24', die der Zeilenstruktur 24 der Figur 1 entspricht. Es ist ebenfalls ein Zeilenanfangsdetektor 14 vorgesehen, der über eine Leitung 30 an einem Pseudozufallsgenerator 18 das Zeilenanfangssignal abgibt, wobei vom Pseudozufallsgenerator 18 die Querablenkung gemäß Linie 24' an den Ablenker 2 gegeben wird. Zusätzlich zur Figur 1 ist eine Treiberstufe 20 vorgesehen, die über eine Eingangsleitung 23 das vom Abtaster gemäß Figur 1 vom Verstärker 16 gelieferte Bildsignal erhält. Bei der Treiberstufe 20 handelt es sich um die üblichen HF-Ansteuerstufen für akustooptische Modulatoren. Es kann zusätzlich zwischen Pseudozufallsgenerator 18 und Modulationsstufe 20 eine Verbindung 26 bestehen, damit eine eventuelle Lichtintensitätsänderung, die durch die Ablenkung im Ablenker 2 hervorgerufen wird, in der Treiberstufe auskorrigiert wird. Solche Schaltungen zum Ausregeln von Intensitätsschwankungen des Lichtes, d. h. Helligkeitsschwankungen, sind allgemein bekannt, wozu beispielsweise auf die DE-PS 12 71 755 verwiesen wird. Auf der Aufzeichnungsseite wird ebenfalls jede folgende Zeile - vom Zeilenbeginn her ausgehend - mit der gleichen Zeilenform aufgezeichnet. Hierbei ist gewährleistet, daß die vom Abtaster gelieferte Information ortsgenau wieder aufgezeichnet wird.

Figur 3 zeigt ein Beispiel, wie die einzelnen Zeilen nebeneinander angeordnet sind, aus dem zu ersehen ist, daß alle Zeilen die gleiche Querablenkung haben.

Figur 4 zeigt ein Schaltungsbeispiel eines Pseudozufallsgenerators 18, wie er bei der Abtastung und bei der Aufzeichnung gemäß Figuren 1 und 2 verwendet wird. Der Pseudozufallsgenerator ist derart

- 6 -

ausgebildet, daß digitale Impulsfolgen mit einer sehr langen Periode erzeugt werden. Ein Taktgenerator 27, der z. B. ein käuflicher Generator der Fa. BERKELEY NUCLEONICS Type C-1000 sein kann, wird vom auf Leitung 30 ankommenden Startsignal gestartet und liefert die Taktfrequenz für ein digitales Netzwerk 28. Dieses digitale Netzwerk 28 besteht aus einem Schieberegister mit geeigneten Rückkoppelungen und generiert eine digitale Zählerfolge mit gewünschten statistischen Eigenschaften und langer Periode. Weiterhin ist eine Analogstufe 29 mit dem digitalen Netzwerk 28 verbunden, die aus den digitalen Zuständen des Netzwerkes 28 ein analoges Ausgangssignal 17 erzeugt, das jeweils an die Ablenker 2 gegeben wird.

In der schaltungstechnischen Ausführung kann der Ausgang des Taktgenerators, der bei dem angegebenen Beispiel 100 MHz hat, vor der Zuführung zum Zufallsgenerator mit einem Teiler frequenzmäßig herabgesetzt werden, z. B. mit einem programmierbaren Zähler der Fa. Texas Instruments, Type SN 745197. Als Pseudozufallsgenerator kann eine Schaltung aus "Electronics", March 10, 1981, Seite 173 von Wayne Sward, Sperry Univac, verwendet werden. Dieser Generator hat nur einen Ausgang, an den als Analogstufe 29 ein Tiefpaß, z. B. ein einfaches RC-Glied, nachgeschaltet ist.

Dadurch, daß der Pseudozufallsgenerator bei jedem Zeilenanfang neu gestartet wird und im Verlauf der Zeile das gleiche statistische Signal liefert, ist gewährleistet, daß sämtliche Zeilen in gleicher

- 7 -

nebeneinander liegender Linienform, wie dies in
Figur 3 dargestellt ist, aufgezeichnet werden.

Die Erfindung ist nicht auf das dargestellte Beispiel beschränkt; als Abtast- und Aufzeichnungseinheit können auch Trommelgeräte oder Flachbettgeräte mit beweglichen Tischen verwendet werden.
Die Querbewegung gemäß der Erfindung soll grundsätzlich eine unregelmäßige Bewegung sein, die mit
dem Raster der Vorlage kein Moiré ergibt.

Es liegt aber auch im Rahmen der Erfindung, daß
sich die Zufallsfolge, durch die die unregelmäßige
Querbewegung erzeugt wird, innerhalb der Zeile
einmal oder mehrmals wiederholen darf.

- 8 -

Patentanspruch

Verfahren und Einrichtung zur Unterdrückung von Moiréerscheinungen bei der Wiederaufzeichnung bereits gerasterter Bilder mittels eines die Vorlage abtastenden elektrooptischen Abtastorgans, eines Aufzeichnungsorgans und eines Aufzeichnungsträgers, wobei zwischen Abtastorgan und Vorlage eine zeilenmäßige Relativbewegung und zwischen Aufzeichnungsorgan und Aufzeichnungsträger eine der Relativbewegung zwischen Abtastorgan und Vorlage entsprechende zeilenmäßige Relativbewegung durchgeführt wird, dadurch gekennzeichnet, daß der zeilenmäßigen Relativbewegung auf der Abtastseite und der zeilenmäßigen Relativbewegung auf der Aufzeichnungsseite je eine quer zur Zeilenrichtung verlaufende auf der Abtastseite und auf der Aufzeichnungsseite sich entsprechende von Zeile zu Zeile gleiche unregelmäßige Querbewegung überlagert wird.

Fig. 1

Fig. 2

0069344

**Fig. 3**

**Fig. 4**

**EUROPÄISCHER RECHERCHENBERICHT**

Europäisches
Patentamt

. EP 82 10 5858.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 315 594 (AGFA-GEVAERT AG)<br>* Ansprüche 1 bis 3 , 5; Fig. 3,4 * | 1 |
| Y | DE - A1 - 2 442 235 (AGFA-GEVAERT AG)<br>* Anspruch 1 * | 1 |
| Y | US - A - 3 997 722 (A. M. BARDOS)<br>* Zusammenfassung * | 1 |
| A | DE - B2 - 2 635 674 (R. HELL GMBH)<br>* ganzes Dokument * | |

**KLASSIFIKATION DER ANMELDUNG (Int. Cl.³)**

H 04 N 1/22

**RECHERCHIERTE SACHGEBIETE (Int. Cl.³)**

H 04 N 1/024

H 04 N 1/04

H 04 N 1/22

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 20-09-1982 | FUCHS |

EPA form 1503.1  06.78